(19) Europäisches Patentamt / European Patent Office / Office européen des brevets

(11) **EP 2 308 181 B1**

(12) **FASCICULE DE BREVET EUROPEEN**

(45) Date de publication et mention
de la délivrance du brevet:
**28.03.2012 Bulletin 2012/13**

(21) Numéro de dépôt: **09765790.2**

(22) Date de dépôt: **11.06.2009**

(51) Int Cl.:
*H04W 4/04* (2009.01)     *H04B 7/155* (2006.01)
*H04W 16/26* (2009.01)

(86) Numéro de dépôt international:
**PCT/EP2009/057224**

(87) Numéro de publication internationale:
**WO 2009/153210 (23.12.2009 Gazette 2009/52)**

(54) **PROCÉDÉ ET UN DISPOSITIF POUR RELAYER UNE COMMUNICATION RADIOFRÉQUENCE ENTRE DES APPAREILS DE COMMUNICATION SITUÉS DANS DES ENVIRONNEMENTS DIFFÉRENTS.**

VERFAHREN UND EINRICHTUNG ZUM WEITERLEITEN EINER HOCHFREQUENZKOMMUNIKATION ZWISCHEN IN VERSCHIEDENEN UMGEBUNGEN BEFINDLICHEN KOMMUNIKATIONSVORRICHTUNGEN

METHOD AND DEVICE FOR RELAYING A RADIOFREQUENCY COMMUNICATION BETWEEN COMMUNICATION APPARATUSES LOCATED IN DIFFERENT ENVIRONMENTS

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **13.06.2008 FR 0853950**

(43) Date de publication de la demande:
**13.04.2011 Bulletin 2011/15**

(73) Titulaire: **Sagem Défense Sécurité**
**75015 Paris (FR)**

(72) Inventeurs:
• **BREVALLE, Christophe**
  **F-75015 Paris (FR)**
• **COURTET, Patrice**
  **F-75015 Paris (FR)**
• **BARD, Yves**
  **F-75015 Paris (FR)**

(74) Mandataire: **Maillet, Alain et al**
**Cabinet Le Guen Maillet**
**5, place Newquay**
**B.P. 70250**
**35802 Dinard Cedex (FR)**

(56) Documents cités:
**EP-A- 0 490 441          WO-A-94/01941**
**US-A1- 2005 094 610     US-A1- 2008 125 159**

## Description

La présente invention concerne un procédé et un dispositif pour relayer un signal de balise ou un signal de trafic d'une communication radiofréquence établie entre des appareils de communication situés dans des environnements différents qui ne permettent pas aux ondes radiofréquences relatives à cette communication de se propager d'un environnement à l'autre sans être très atténuées.

Lesdits environnements sont appelés par la suite environnements à relayer pour exprimer le fait qu'ils ne permettent pas aux ondes radiofréquences porteuses d'un signal de balise ou d'un signal de trafic de se propager d'un environnement à l'autre sans être très atténuées.

Une communication radiofréquence est utilisée pour déployer dans un environnement un service de type audio et/ou de transfert de données dans lequel des appareils communiquent entre eux des données qui sont soit vocales soit autres telles que par exemple des images, des fichiers de données, etc.

Une communication radiofréquence consiste à transporter ces données par ondes radiofréquences qui se propagent dans un environnement afin que le signal porteur de ces données soit acheminé d'un appareil émetteur vers soit un appareil récepteur dans le cas d'une communication, soit plusieurs appareils récepteurs dans le cas d'une diffusion.

Dans certains réseaux de communications, tel que par exemple un réseau DECT (Digital Enhanced Cordless Telecommunications en anglais), l'un des appareils de communication, appelée base par la suite, diffuse un signal de balise que tout autre appareil de communication doit recevoir pour pouvoir se synchroniser en temps et en fréquence avec cette base. Ainsi, une fois qu'un appareil est synchronisé en temps et en fréquence avec la base, cet appareil peut établir des communications radiofréquences avec cette base selon un protocole. Par contre, lorsqu'un appareil ne reçoit plus le signal de balise, cet appareil ne peut plus établir de nouvelles communications. On peut noter que si des appareils sont déjà en communication lors de la perte du signal de balise, la communication est maintenue car la synchronisation est directement faite par les slots de communication c'est-à-dire les slots qui sont dédiés aux signaux de trafic.

Pour qu'une communication radiofréquence sur de tels réseaux soit de qualité acceptable il faut par conséquent que les ondes radiofréquences relatives aux signaux échangés, signaux de balise ou de trafic, ne soient pas excessivement atténuées entre l'appareil émetteur de ces ondes et un appareil récepteur avec qui il est en communication. En effet, il est nécessaire que le niveau de puissance de ces ondes radiofréquences soit suffisant afin que, notamment, un appareil reste synchronisé avec le signal de balise lorsque cet appareil n'est pas en communication.

L'atténuation d'une onde radiofréquence est due à la distance qui sépare l'appareil émetteur d'un appareil récepteur mais elle est également due à la réflexion de ces ondes sur des obstacles situés sur le chemin reliant ces deux appareils. Pour palier à ce phénomène de réflexions, la norme DECT a défini un mécanisme de diversité d'antennes, défini par la norme ETSI EN 300 175-3 VI.4.2 (1999-06) Part 3: Medium Access Control (MAC) layer, qui est activé dès lors qu'un appareil est en communication avec un autre.
Voir EP-A-0490441 (Philips).

Le mécanisme de diversité d'antennes est mis en oeuvre par un appareil de communication par des moyens pour mesurer le niveau de puissance d'un signal reçu par chaque antenne de cet appareil et des moyens pour sélectionner l'une de ces antennes comme antenne de réception par comparaison entre eux des niveaux de puissance ainsi mesurés. Ainsi, à chaque réception d'un signal par un appareil de communication, y compris la base, le mécanisme de diversité d'antennes permet de déterminer quelle est l'antenne qui permet de recevoir le signal de manière optimale.

Nous considérerons par la suite que chaque appareil de communication, y compris la base, est équipé de moyens qui lui permettent de mettre en oeuvre un mécanisme de diversité d'antennes.

Le mécanisme de diversité d'antennes ne permet pas de palier à toutes les causes d'atténuation d'une onde radiofréquence. En particulier il ne permet pas de résoudre l'atténuation d'une onde radiofréquence qui est due à un obstacle séparant deux environnements à relayer. Ainsi, un appareil récepteur d'une onde radiofréquence, qui se trouvait jusque là dans le même environnement qu'un appareil émetteur de cette onde et qui change d'environnement pour aller dans un nouvel environnement qui ne permet pas à cette onde radiofréquence de se propager dans ce nouvel environnement sans être très atténuée, ne reçoit plus l'onde à un niveau de puissance suffisant, provoquant ainsi l'interruption de la communication avec l'appareil émetteur et notamment l'arrêt de la réception du signal de balise nécessaire à cet appareil récepteur pour se synchroniser avec l'appareil émetteur de ce signal de balise.

Le problème qui se pose est donc celui de la continuité de la réception d'un signal de balise ou d'un signal de trafic d'une communication radiofréquence établie entre des appareils de communication situés dans des environnements à relayer lorsque ces appareils changent d'environnement.

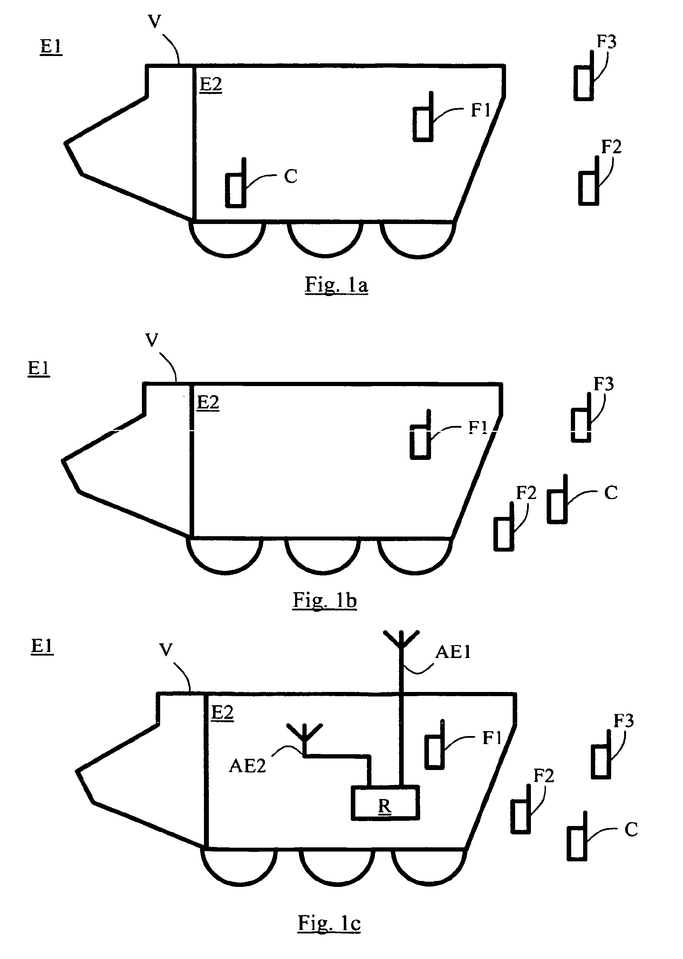

Les Fig. 1a-b représentent une illustration de ce problème de continuité de réception d'un signal de balise ou d'un signal de trafic d'une communication établie entre un appareil émetteur et un appareil récepteur dans le cas d'une application militaire.

A la Fig. la, il est représenté un véhicule blindé V dans lequel se trouvent deux appareils mobiles de communication référencés C et F1. L'appareil C est la base qui diffuse un signal de balise que l'appareil F1 reçoit.

L'appareil F1 se synchronise alors avec ce signal de balise et ces deux appareils peuvent établir une communication car les deux appareils se trouvent dans un même environnement E2, en l'occurrence l'intérieur du véhicule V.

A l'extérieur du véhicule V, c'est-à-dire dans un autre environnement E1, se trouvent deux autres appareils mobiles de communication F2 et F3 qui sont prévus pour recevoir le signal de balise émis par la base C et ainsi établir des communications avec les autres appareils de communication synchronisés sur ce signal de balise. Cependant, le blindage du véhicule V étant constitué de matériaux qui atténuent très fortement les ondes radiofréquences émises à l'intérieur du véhicule, les appareils F2 et F3 ne reçoivent pas le signal de balise et ne peuvent donc pas entrer en communication ni entre eux ni avec la base C ou l'appareil F1.

De manière similaire, la Fig. 1b représente le cas où la base C se trouve à l'extérieur du véhicule V. Cette fois-ci, les appareils F2 et F3 qui se trouvent dans le même environnement E1 que la base C reçoivent le signal de balise et peuvent donc communiquer entre eux et/ou avec la base C. Par contre, l'appareil F1 situé à l'intérieur du véhicule V, ne reçoit plus le signal de balise et ne peut donc pas entrer en communication avec les appareils C, F2 ou F3.

Ainsi, il se produit des moments, notamment lors des phases d'embarquement ou de débarquement du véhicule d'un groupe de personnes équipées chacune d'un appareil de communication mobile, où certains membres du groupe ne sont pas dans le même environnement que la personne qui est équipée de la base. Par exemple, lorsque ces membres sortent du véhicule V et que la personne portant la base reste dans le véhicule V, ces membres ne sont plus en communication avec les membres restés à l'intérieur du véhicule. De plus, lorsque tous les membres du groupe y compris celui qui porte la base sont sortis du véhicule, les membres de ce groupe peuvent établir des communications entre eux. Par contre, ce groupe n'est plus en communication avec d'autres personnes restés à bord du véhicule du fait que le blindage du véhicule atténue très fortement les ondes radiofréquences externes qui ne peuvent se propager à l'intérieur du véhicule V.

Pour résoudre ce problème de continuité de réception d'un signal entre différents environnements à relayer lorsqu'un appareil change d'environnement, il est connu un dispositif pour relayer un signal entre deux environnements. Le dispositif comporte deux antennes, une antenne étant positionnée dans chaque environnement, et un relais radiofréquence utilisé pour relayer le signal reçu par l'une de ces deux antennes vers l'autre antenne.

Cependant, l'inventeur a observé qu'un tel dispositif ne résout pas le problème de continuité de la réception d'un signal car des ruptures de réception de ce signal se produisent tout de même lorsqu'un appareil change d'environnement.

En effet, considérons un tel dispositif représenté à la Fig. 1c. Le dispositif comporte une antenne AE2 positionnée à l'intérieur du véhicule V, une autre antenne AE1 positionnée à l'extérieur du véhicule V et un relais radiofréquence R, positionné par exemple à l'intérieur du véhicule V, qui est utilisé pour relayer les signaux reçus par l'antenne AE1 vers l'antenne AE2 et les signaux reçus par l'antenne AE2 vers l'antenne AE1.

Le relais radiofréquence R est constitué de deux parties radio indépendantes l'une de l'autre en radiofréquence. Chacune de ces parties est reliée à un port du relais et chacun de ces ports relais est relié à l'une des deux antennes AE1 ou AE2. L'une des parties radio du relais se synchronise avec un signal de balise diffusé par une base, signal qui est reçu via l'un de ses deux ports, et utilise ce signal de balise pour donner une référence temporelle à l'autre partie radio. Ainsi, les deux parties radio du relais sont synchronisées en temps et en fréquence avec le signal de balise diffusé par cette base. On dit alors que le relais est synchronisé.

Un exemple de relais de communication radiofréquence est donné par la norme DECT ETS1 EN 300 700 qui définit également un protocole, de type TDMA (Time Division Multiple Acces en anglais). En substance, une fois que le relais est synchronisé, un signal de balise ou de trafic est émis par un appareil sur un couple slot/fréquence S1. Une fois reçu sur l'un des ports du relais, dit port de réception, par exemple celui relatif à l'antenne AE1, ce signal est relayé, c'est-à-dire qu'un nouveau signal de balise ou de trafic, est créé sur un couple slot / fréquence S2 différent du couple slot/fréquence S1. Ce signal relayé est alors émis via l'autre port du relais, dit port d'émission du relais, relatif à l'antenne AE2 selon cet exemple.

Considérons, en référence à la Fig. 1c, que l'appareil F1 est à l'intérieur du véhicule V et que la base C est à l'extérieur. La base C émet le signal de balise sur le couple slot/fréquence S1 et ce signal est reçu par le relais R via l'antenne AE1. Le signal de balise relayé c'est-à-dire le signal de balise émis sur le couple slot/fréquence S2 est alors diffusé via l'antenne AE2. L'appareil F1 se synchronise alors sur ce signal de balise relayé c'est-à-dire sur un signal émis sur le couple slot/fréquence S2.

Considérons maintenant que l'appareil F1 sort du véhicule. L'appareil F1 perd alors le signal de balise relayé émis sur le couple slot/fréquence S2 qu'il recevait jusque-là à partir de l'antenne AE2 car ce signal est très atténué par le blindage du véhicule V. L'appareil F1, ne recevant plus de signal de balise, passe alors en mode recherche pour trouver un nouveau signal de balise, en l'occurrence le signal de balise qui est émis par la base C sur le couple slot/fréquence S1.

Tant que l'appareil F1 n'a pas retrouvé ce signal de balise, il ne peut pas se synchroniser avec la base C et ne peut donc pas établir de nouvelles communications. Il y a donc rupture de la réception du signal de balise pendant ce temps de recherche.

Le problème se pose de manière similaire pour la continuité des signaux de trafic dont la rupture de réception provoque la perte de synchronisation de l'appareil F1 avec la base C et donc la rupture de la communication en cours.

Afin de permettre à un appareil de pouvoir changer d'environnement sans rupture de réception du signal de balise ou de réception d'un signal de trafic d'une communication établie, l'inventeur a observé que le même signal de balise ou de trafic devait être émis simultanément dans tous les environnements et ce quel que soit l'environnement dans lequel la base C se trouve.

A cet effet, l'invention concerne un dispositif pour relayer un signal de balise ou un signal de trafic d'une communication radiofréquence établie entre des appareils de communication susceptibles de se déplacer d'un environnement à un autre, lesdits environnements ne permettant pas aux ondes radiofréquences relatives à cette communication de se propager d'un environnement à l'autre sans être très atténuées, chaque appareil de communication étant prévu pour mettre en oeuvre un mécanisme de diversité d'antennes, ledit dispositif comportant une pluralité d'antennes destinées à recevoir un signal et un relais radiofréquence destiné à relayer un signal reçu par une antenne positionnée dans l'un desdits environnements vers une autre antenne positionnée dans un autre environnement. Le dispositif est caractérisé en ce qu'il comporte un appareil, dit d'aiguillage radiofréquence, qui comporte

- au moins un port, dit port réception relais, qui est relié à un port de réception du relais radiofréquence et qui fonctionne en réception,
- un port, dit port émission relais, qui est relié à un port d'émission du relais radiofréquence et qui fonctionne en émission, et
- autant de ports, dits ports d'antenne, que d'environnements à relayer, chaque port d'antenne est relié à une antenne d'un environnement, et est en relation avec au moins un port réception relais.

Ledit appareil d'aiguillage radiofréquence est prévu pour qu'un signal reçu sur un des ports d'antenne est acheminé intégralement à un port réception relais, et que lorsqu'un signal relayé est reçu sur le port d'émission relais, ledit signal est simultanément acheminé jusqu'à chaque port d'antenne, le niveau de puissance du signal relayé sur chaque port d'antenne étant égal à un pourcentage du niveau de puissance total du signal relayé.

L'appareil d'aiguillage radiofréquence permet qu'un signal de balise ou d'un signal de trafic d'une communication établie qui est émis par la base soit reçu par le relais quel que soit l'environnement dans lequel se trouve cet appareil. De plus, l'appareil d'aiguillage radiofréquence permet qu'un signal reçu sur l'un de ses ports d'antenne soit relayé par le relais radiofréquence et le signal relayé est émis simultanément dans les différents environnements. L'appareil d'aiguillage radiofréquence est également avantageux car chaque pourcentage du niveau de puissance du signal relayé peut être réglé selon l'environnement et ce grâce à sa structure interne.

De plus, en réception, l'appareil d'aiguillage radiofréquence n'atténue pas un signal reçu sur l'un de ses ports d'antennes mais aiguille ce signal vers l'un des ports de réception du relais radiofréquence.

Selon un mode de réalisation, l'appareil d'aiguillage radiofréquence est prévu pour que le pourcentage du niveau de puissance du signal relayé qui est acheminé jusqu'à un port d'antenne soit plus élevé que les pourcentages du niveau de puissance du signal relayé qui est acheminé jusque chaque autre port d'antenne.

Selon une variante de ce mode de réalisation, l'appareil d'aiguillage radiofréquence est prévu pour que les pourcentages du niveau de puissance du signal relayé qui est acheminé jusqu'aux dits autres ports d'antenne soient tous égaux à une même valeur.

Selon un mode de réalisation, le port émission relais, lors d'une émission, est relié à tous les ports d'antenne avec des niveaux d'émission adaptés à chacun des environnements, alors qu'en mode réception, chaque port réception relais est relié directement à un seul port d'antenne.

Ainsi, le port d'émission relais est également un port réception relais.

Selon une variante de ce mode de réalisation, au moins un port réception relais est relié à plus d'un port d'antenne.

Cette variante de ce mode de réalisation est avantageuse lorsque plusieurs environnements requièrent un même pourcentage du niveau de puissance du signal relayé.

Selon un mode de réalisation, le dispositif comporte des moyens pour déterminer dans quel environnement se trouve un appareil à l'origine de l'émission d'un signal reçu par au moins un des ports d'antenne.

Ce mode de réalisation est avantageux car à chaque réception d'un signal émis par un appareil de communication, le dispositif détermine dans quel environnement se trouve cet appareil. Ceci est avantageux pour des applications dans lesquelles le support portant cet appareil de communication se déplace fréquemment et de manière rapide.

Selon une variante de ce mode de réalisation, le dispositif comporte des moyens pour visualiser l'environnement dans lequel se trouve chaque appareil.

Selon une variante de ce mode de réalisation, le dispositif comporte des moyens pour détecter le changement d'environnement d'un appareil de communication à l'origine de l'émission d'un signal reçu sur au moins un des ports d'antenne.

L'inventeur a observé qu'un système de communication radiofréquence comportant l'un des dispositifs ci-dessus dans lequel l'appareil d'aiguillage est associé au mécanisme de diversité d'antennes mis en oeuvre par le relais ne permet pas d'assurer la continuité de la synchronisation lorsque les appareils de communications sont synchronisés directement sur la base. En effet, lorsque ladite base change d'environnement, les appareils de communications perdent son signal de balise.

Pour éviter cela, selon un mode de réalisation d'un tel système, le dispositif comporte des moyens pour ordonner à la base de déclencher des moyens pour prévenir les appareils de communication qui sont synchronisés à partir du signal de balise qu'elle émet, de se synchroniser sur le signal de balise relayé par le dispositif La base comporte alors des moyens pour prévenir les appareils de communication qui sont synchronisés à partir du signal de balise qu'elle émet, de se synchroniser sur le signal de balise relayé par le dispositif, moyens qui sont activés suite à la réception par la base de l'ordre de déclenchement.

L'inventeur a également observé que la diffusion multiple et simultanée d'un signal relayé dans les différents environnements engendre des problèmes tels que des combinaisons destructrices des ondes radiofréquences relayées entre elles. Ce cas se produit, selon l'exemple de la Fig. 1c, lorsque la porte du véhicule V est ouverte par exemple. L'inventeur a alors observé qu'en adaptant le niveau de puissance des signaux émis par les appareils de communication en fonction des environnements dans lesquels ces appareils de communication se trouvent, les interférences entre les signaux relayés diminuent considérablement.

A cet effet, selon un mode de réalisation du système, le dispositif comporte des moyens pour ordonner à un appareil de communication détecté comme ayant changé d'environnement d'adapter son niveau de puissance d'émission selon le nouvel environnement dans lequel il se trouve. Chaque appareil de communication du système comporte alors des moyens pour adapter son niveau de puissance suite à la réception de cet ordre.

Un tel système est avantageux car il permet d'adapter le niveau de puissance des signaux qui sont émis dans des environnements qui peuvent être très différents notamment en terme de volume ou dans des environnements qui comportent des circuits électroniques susceptibles d'être sensibles à la diffusion de signaux radiofréquences comme ceux qui sont embarqués dans un véhicule.

Selon un autre de ses aspects, l'invention concerne un procédé pour relayer un signal de balise ou un signal de trafic d'une communication radiofréquence établie entre des appareils de communication susceptibles de se déplacer d'un environnement à un autre, lesdits environnements ne permettant pas aux ondes radiofréquences relatives à cette communication de se propager d'un environnement à l'autre sans être très atténuées, chaque appareil de communication étant prévu pour mettre en oeuvre un mécanisme de diversité d'antennes, et une antenne étant positionnée dans chaque environnement. Le procédé est caractérisé en ce qu'il comporte une étape de réception par au moins une antenne du signal de balise ou de trafic, une étape pour générer un signal, dit relayé, à partir du signal reçu, et une étape d'émission simultanée par chaque antenne du signal relayé, le niveau de puissance du signal relayé qui est émis par antenne étant égal à un pourcentage du niveau de puissance total du signal relayé.

Selon un mode de réalisation, le pourcentage du niveau de puissance du signal relayé qui est émis par une antenne est plus élevé que les pourcentages du niveau de puissance du signal relayé qui sont émis par les autres antennes.

Selon une variante de ce mode de réalisation, les pourcentages du niveau de puissance du signal relayé qui sont émis par lesdites autres antennes sont tous égaux à une même valeur.

Selon un mode de réalisation, le procédé comporte une étape de détermination de l'environnement dans lequel se trouve un appareil à l'origine de l'émission d'un signal reçu par au moins une des antennes.

Avantageusement, le procédé comporte une étape de visualisation au cours de laquelle est visualisé l'environnement dans lequel se trouve un appareil de communication.

Selon une variante de ce mode de réalisation, le procédé comporte une étape de détection de changement d'environnement d'un appareil de communication.

Avantageusement, suite à la détection de changement d'environnement d'un appareil de communication, le procédé comporte une étape d'adaptation du niveau de puissance d'émission dudit appareil de communication au cours de laquelle le niveau de puissance le plus élevé parmi ceux mesurés d'un signal reçu est comparé à une valeur prédéterminée afin d'adapter le niveau de puissance d'émission dudit appareil de communication à l'origine de l'émission du signal reçu à l'environnement dans lequel se trouve cet appareil.

De préférence, au cours de l'étape d'adaptation du niveau de puissance d'émission dudit appareil de communication, un signal, dit d'adaptation du niveau de puissance d'émission, préférentiellement d'un service CLMS, est reçu sur l'antenne de réception de cet appareil de communication afin que cet appareil de communication adapte son niveau de puissance d'émission au nouvel environnement dans lequel il se trouve.

Avantageusement, suite à la détection de changement d'environnement d'une base, le procédé comporte une étape pour prévenir les appareils de communication qui sont synchronisés à partir du signal de balise émis par cette base de se synchroniser sur le signal de balise relayé.

Selon un autre de ses aspects, l'invention concerne un programme d'ordinateur stocké sur un support d'informations d'un dispositif pour relayer un signal de balise ou un signal de trafic d'une communication radiofréquence établie entre des appareils de communication situés dans des environnements différents, ledit programme comportant des instructions permettant de mettre en oeuvre l'un des procédés ci-dessus, lorsqu'il est chargé et exécuté par l'un des dispositifs ci-dessus.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:

Les Fig. 1a-b représentent une illustration du problème de continuité de réception d'un signal de balise ou d'un signal de trafic d'une communication établie entre un appareil émetteur et un appareil récepteur situés dans des environnements à relayer lorsque ces appareils changent d'environnement,

La Fig. 1c représente schématiquement un dispositif pour relayer un signal de balise ou un signal de trafic d'une communication établie entre appareils de communication de l'état de la technique,

La Fig. 2 représente schématiquement un mode de réalisation d'un dispositif pour relayer un signal de balise ou un signal de trafic d'une communication établie entre appareils de communication selon l'invention,

Les Fig. 3a-c représentent schématiquement la structure interne de l'appareil d'aiguillage radiofréquence,

La Fig. 4 représente schématiquement des modes de réalisation et variantes d'un dispositif pour relayer un signal de balise ou un signal de trafic d'une communication établie entre appareils de communication situés dans des environnements à relayer lorsque ces appareils changent d'environnement selon l'invention,

La Fig. 5 représente les étapes du procédé pour relayer un signal de balise ou un signal de trafic d'une communication établie entre appareils de communication situés dans des environnements à relayer lorsque ces appareils changent d'environnement,

La Fig. 6 représente schématiquement un exemple d'utilisation du dispositif selon l'invention pour relayer deux environnements,

La Fig. 7 représente schématiquement un exemple d'utilisation du dispositif selon l'invention pour relayer trois environnements.

L'invention concerne un procédé et un dispositif pour relayer un signal de balise ou un signal de trafic d'une communication radiofréquence établie entre des appareils de communication situés dans des environnements à relayer.

Bien que ce dispositif soit présenté dans le cadre d'une application de type militaire, le domaine d'application de l'invention s'étend à toute application qui nécessite la continuité d'une communication radiofréquence entre appareils mobiles situés dans des environnements à relayer dès lors que l'un de ces appareils change d'environnement, c'est-à-dire dans toute application faisant appel à un relais radiofréquence destiné à relayer les ondes radiofréquences relatives à une communication qui se propagent dans un environnement pour que ces ondes puissent également se propager dans un autre environnement et ce quels que soient ces environnements tels que l'intérieur d'une salle d'un bâtiment, l'intérieur d'un véhicule mobile ou statique, l'air libre etc.

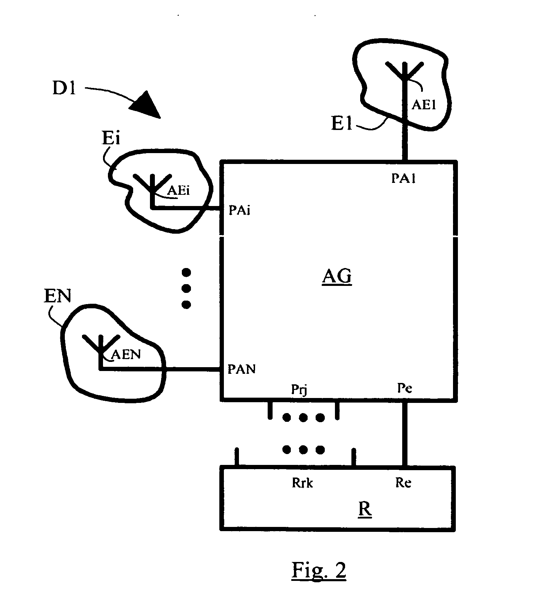

La Fig. 2 représente schématiquement le dispositif D1 pour relayer un signal de balise ou un signal de trafic d'une communication établie entre appareils de communication selon l'invention.

Le dispositif D1 comporte un relais radiofréquence R, une pluralité d'antennes AEi positionnées chacune dans un environnement Ei à relayer et un appareil d'aiguillage radiofréquence AG.

Le relais radiofréquence R comporte au moins un port dit de réception Rrk c'est-à-dire un port destiné à recevoir un signal à relayer et un port dit port d'émission Re c'est-à-dire un port destiné à émettre un signal relayé. On peut noter qu'un port du relais R peut être à la fois port d'émission Re et port de réception Rrk.

Lorsqu'un signal est reçu sur un port de réception Rrk, signal émis sur un couple slot/fréquence particulier, un nouveau signal, dit relayé, est généré et émis sur un autre couple slot/fréquence tel qu'expliqué dans la partie introductive et ce nouveau signal relayé est alors émis sur le port d'émission Re.

Dans le but d'augmenter la quantité d'informations circulant par trame, une partie des slots TDMA est allouée aux communications d'une des deux parties radio du relais R tandis que l'autre partie des slots de trame TDMA est allouée à l'autre partie radio. Ainsi, il n'y a pas de slots non occupés et toute la trame peut être utilisée pour transmettre des données. L'une des parties radio va n'utiliser que les slots par exemple pairs d'une trame TDMA tandis que l'autre partie radio va n'utiliser que les slots impairs de cette trame. Le brevet français FR 2,869,495 décrit un tel système.

L'appareil d'aiguillage radiofréquence AG comporte autant de ports PAi, dits ports d'antenne, que d'environnements à relayer, en l'occurrence N, au moins un port Prj, dit port réception relais, et un port Pe, dit port émission relais. On peut noter qu'un port de l'appareil d'aiguillage AG peut être à la fois port émission relais Pe et port réception relais Prj.

Chaque port d'antenne PAi est relié à une antenne AEi qui est destinée à émettre les ondes radiofréquences porteuses d'un signal de balise ou de trafic dans l'environnement Ei dans lequel elle est située. De plus, chaque port d'antenne PAi est en relation avec un port réception relais Prj. Ainsi, un signal reçu par une antenne PAi est acheminé jusqu'à un port réception relais Prj.

Chaque port réception relais Prj est relié à un port de réception Rrk du relais radiofréquence R et le port émission relais Pe est relié au port d'émission Re du relais R,

L'appareil d'aiguillage radiofréquence AG est prévu pour qu'un signal reçu sur un des ports antennes PAi soit acheminé avec un niveau de puissance égal à celui du signal reçu au port réception relais correspondant à ce port d'antenne, et pour que, suite à la réception d'un signal sur le port émission relais Pe, ce signal soit acheminé jusqu'à chaque port antenne PAi, le niveau de puissance du signal sur chaque port d'antenne PAi étant égal à un pourcentage du niveau de puissance total du signal reçu sur le port émission relais Pe.

L'appareil d'aiguillage radiofréquence AG est préférentiellement un circuit imprimé sur lequel est gravé un circuit RF et ce circuit est installé dans un boîtier placé près du relais. Le circuit RF est soit un circuit passif soit un circuit actif qui amplifie les signaux reçus et/ou émis.

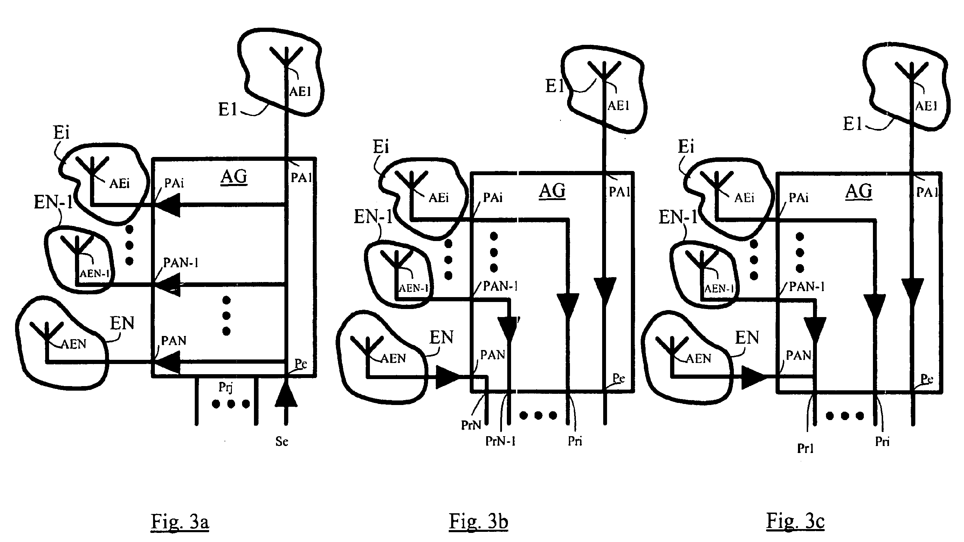

Les Fig. 3a-c représentent schématiquement la structure interne de l'appareil d'aiguillage radiofréquence AG.

En référence avec la Fig. 3a, lors de l'émission, un signal Se est reçu sur le port émission relais Pe, ce signal est acheminé jusque chaque port d'antenne PAi. Ainsi, le signal Se est diffusé simultanément dans tous les environnements Ei à relayer.

Le niveau de puissance du signal relayé Psei sur chaque port d'antenne PAi est un pourcentage du niveau de puissance total Pse du signal Se, c'est-à-dire que la somme des niveaux de puissance Psei est égal à celui du signal Se. En termes mathématiques, le niveau de puissance Psei est donné par

$$Psei = a_i * Pse$$

avec $a_i$ une valeur réelle positive non nulle et strictement inférieure à 1 pour tout i et sous la contrainte que

$$\sum_{i=1}^{N} a_i = 1$$

Selon un mode de réalisation de l'appareil d'aiguillage radiofréquence AG, le pourcentage, par exemple $a_1$, du niveau de puissance Pse1 du signal Se qui est acheminé jusqu'à un port d'antenne est plus élevé que les pourcentages $a_i$ i # 1 du niveau de puissance du signal qui est acheminé jusque chaque autre port d'antenne, c'est-à-dire que $a_1 = 1 - \sum_{i=2}^{N} a_i$.

Préférentiellement, les pourcentages $a_i$ i # 1 du niveau de puissance du signal Se qui est acheminé jusqu'aux dits autres ports d'antenne sont tous égaux à une même valeur $b$, c'est-à-dire que $a_i = b \; \forall i \neq 1$ avec $b$ une valeur réelle positive non nulle et strictement inférieure à 1. Par exemple $b = 0,01$ *pour* $N < 10$.

L'appareil d'aiguillage radiofréquence AG est également prévu pour qu'un signal reçu sur l'un des ports d'antenne PAi soit acheminé intégralement vers un port réception relais Prj, c'est-à-dire que le niveau de puissance du signal reçu sur le port d'antenne PAi est égal à celui de ce signal une fois acheminé jusqu'au port réception relais Prj.

La Fig. 3b représente un mode de réalisation de l'appareil d'aiguillage radiofréquence AG en réception.

Selon ce mode, chaque port réception relais Prj est relié à un seul port antenne PAi et le port émission relais Pe est relié à un seul port d'antenne, en l'occurrence PA1. Ainsi, un signal reçu sur un port d'antenne PAi est acheminé avec un niveau de puissance égal à celui du signal reçu Sri jusqu'au port réception relais PRi correspondant et un signal reçu sur le port d'antenne PAl est acheminé avec un niveau de puissance égal à celui du signal reçu jusqu'au port émission relais Pe.

On peut noter que selon ce mode de réalisation, le port émission relais Pe est aussi un port réception relais Rrk.

La Fig. 3c représente une variante du mode de réalisation de l'appareil d'aiguillage radiofréquence de la Fig. 3b.

En effet, selon ce mode de réalisation, un port réception relais Prj est relié à plus d'un port d'antenne, en l'occurrence le port réception relais PR1 est relié aux ports d'antennes PAN-1 et PAN. Ainsi, un signal reçu soit par le port d'antenne PAN-1 ou PAN est acheminé avec un niveau de puissance égal à celui du signal reçu vers le port réception relais PR1.

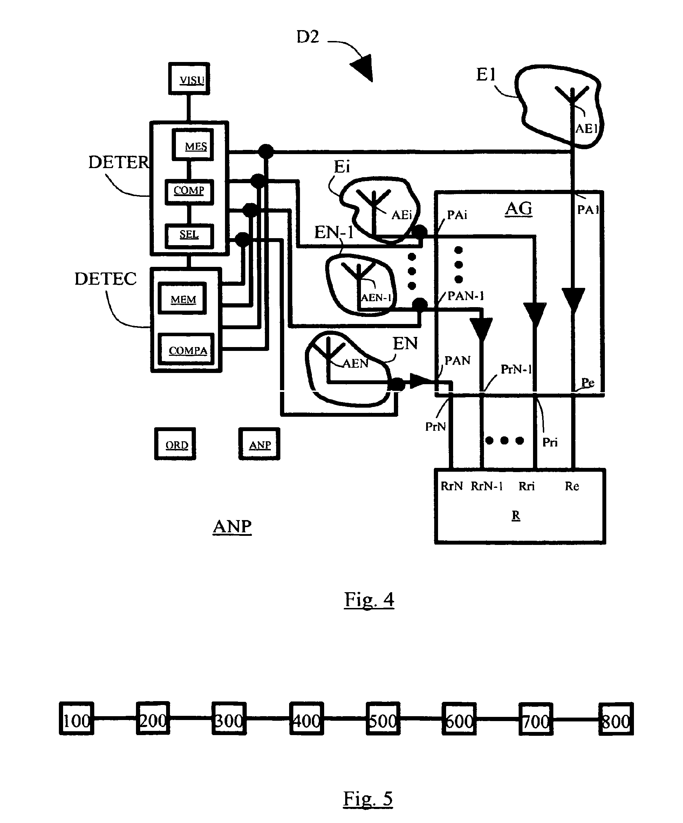

La Fig. 4 représente schématiquement des modes de réalisation et variantes d'un dispositif pour relayer un signal de balise ou un signal de trafic d'une communication établie entre appareils de communication selon l'invention.

Le dispositif D2 comporte une pluralité d'antennes AEi positionnées chacune dans un environnement Ei à relayer, un appareil d'aiguillage radiofréquence AG dont la structure interne est conforme à la Fig. 3b (tel que représenté sur la Fig. 4) ou selon sa variante décrite en relation avec la Fig. 3c, et chaque port relais Prj est relié à un port de réception Rrk du relais R.

Selon un mode de réalisation, le dispositif D2 comporte également des moyens DETER pour déterminer dans quel environnement Ei se trouve un appareil à l'origine de l'émission d'un signal reçu sur au moins un des ports d'antenne PAi.

De préférence, les moyens DETER se composent de moyens MES pour mesurer par antenne le niveau de puissance d'un signal reçu, de moyens COMP pour comparer entre eux les niveaux de puissance ainsi mesurés et de moyens SEL pour sélectionner comme antenne de réception pour l'appareil l'antenne sur laquelle a été mesuré le niveau de puissance le plus élevé. L'environnement dans lequel se trouve l'appareil est alors déterminé comme étant celui dans lequel se trouve ladite antenne de réception ainsi sélectionnée. Les moyens MES sont largement connus dans l'état de la technique. De tels moyens permettent une mesure de niveau de puissance qui est connue sous le nom de mesure RSSI (Received Signal Strength indication en anglais).

Ainsi, les moyens MES, COMP et SEL mettent en oeuvre un mécanisme de diversité d'antennes c'est-à-dire un mécanisme qui permet au dispositif, à chaque réception d'un signal, de choisir l'antenne de réception qui lui permet de recevoir de manière optimale tout signal émis par un appareil de communication.

Selon une variante de ce mode de réalisation, le dispositif D2 comporte des moyens VISU pour visualiser l'environnement dans lequel se trouve chaque appareil de communication. Par exemple, les moyens VISU comportent un écran de visualisation sur lequel est affiché, pour chaque appareil de communication un indicateur permettant de désigner l'un des environnements Ei. Les moyens VISU sont en communication avec les moyens DETER par une liaison filaire ou radiofréquence.

Selon une variante de ce mode de réalisation, le dispositif D2 comporte des moyens DETEC pour détecter qu'un appareil de communication, à l'origine de l'émission d'un signal reçu sur au moins un des ports d'antenne PAi, change d'environnement.

De préférence, les moyens DETEC comportent en outre une mémoire MEM prévue pour mémoriser un environnement EiM préalablement déterminé par les moyens DETER, environnement dans lequel se trouvait ledit appareil, et des moyens COMPA pour comparer ledit environnement EiM ainsi mémorisé avec l'environnement nouvellement déterminé Em par les moyens DETER, environnement dans lequel se trouve dorénavant ledit appareil. L'appareil est alors détecté comme ayant changé d'environnement si l'environnement préalablement mémorisé EiM et l'environnement nouvellement déterminé Em sont différents.

Tels que illustrés sur la Fig. 4, les moyens DETER et DETEC sont reliés à chaque port PAi de l'appareil d'aiguillage AG et les moyens DETER et DETEC communiquent entre eux.

Les moyens DETER et DETEC et notamment les moyens COMP, COMPA et SEL sont, de préférence, des moyens logiciels, c'est-à-dire un jeu d'instructions d'un programme mis en oeuvre, de préférence, par un composant électronique programmable qui est associé au dispositif D2.

Un système de communication radiofréquence comportant l'un des dispositifs décrits ci-dessus dans lequel l'appareil d'aiguillage est associé au mécanisme de diversité d'antennes mis en oeuvre par le relais permet de relayer le signal de balise et de trafic entre les appareils de communication de ce système. On rappelle que au moins l'un de ces appareils de communication émet en continu un signal de balise afin que les autres appareils de communication se synchronisent en temps et en fréquence sur ce signal de balise ou sur ce signal de balise une fois relayé par le dispositif.

Selon un mode de réalisation de ce système, le dispositif D2 comporte des moyens ORD pour ordonner à la base de déclencher des moyens pour prévenir les appareils de communication qui sont synchronisés à partir du signal de balise qu'elle émet, de se synchroniser sur le signal de balise relayé par le dispositif D2. La base comporte alors des moyens pour prévenir les appareils de communication qui sont synchronisés à partir du signal de balise qu'elle émet, de se synchroniser sur le signal de balise relayé par le dispositif D2. Ces moyens internes à la base sont activés suite à la réception par la base de cet ordre de déclenchement. De plus, ces moyens utilisent, en outre, une liste des appareils de communication synchronisés sur le signal de balise émis par la base. Une telle liste, largement connue de l'état de la technique, est maintenue à jour par la base.

Les moyens ORD sont, de préférence, des moyens logiciels, c'est-à-dire un jeu d'instructions d'un programme mis en oeuvre, de préférence, par un composant électronique programmable qui est associé au dispositif D2.

Selon un mode de réalisation du système, le dispositif D2 comporte des moyens ANP pour ordonner à un appareil de communication qui a été détecté comme ayant changé d'environnement, d'adapter son niveau de puissance d'émission selon le nouvel environnement dans lequel il se trouve. Chaque appareil de communication du système comporte alors des moyens pour adapter son niveau de puissance suite à cet ordre émanant du dispositif D2.

Les moyens ANP sont, de préférence, des moyens logiciels, c'est-à-dire un jeu d'instructions d'un programme mis en oeuvre, de préférence, par un composant électronique programmable qui est associé au dispositif.

Selon un mode de réalisation des moyens ANP, un signal SA, dit d'adaptation du niveau de puissance d'émission, préférentiellement d'un service CLMS (connection Less Message System en anglais), est émis par le dispositif D2 et reçu sur l'antenne de réception de l'appareil de communication afin que cet appareil de communication corrige son niveau de puissance d'émission dans le cas où le niveau de puissance du signal mesuré par cet appareil est supérieur ou inférieur à une valeur prédéterminée.

Selon une variante de ce mode de réalisation des moyens ANP, le signal d'adaptation SA porte la valeur du niveau de puissance d'émission que l'appareil de communication doit dès lors utiliser dans le nouvel environnement où il se trouve.

Selon une autre variante de ce mode de réalisation des moyens ANP, le signal d'adaptation SA porte une information indiquant à cet appareil de communication qu'il doit corriger son niveau de puissance d'émission sans pour cela préciser ce nouveau niveau de puissance. Dans ce cas, l'appareil de communication connaît au préalable pour chaque environnement dans lequel il est susceptible de se déplacer, le niveau de puissance d'émission qu'il doit utiliser. Ces niveaux de puissance d'émission sont par exemple mémorisés dans une mémoire interne.

Selon un mode de réalisation du système, au moins un appareil de communication comporte, en interne, des moyens pour détecter qu'il change d'environnement.

De préférence, lesdits moyens internes à un appareil de communication pour détecter qu'il change d'environnement comportent des moyens pour mesurer, régulièrement, le niveau de puissance du signal de balise et des moyens pour comparer la variation dudit niveau de puissance mesuré à un seuil prédéterminé haut ou bas. L'appareil détecte alors qu'il a changé d'environnement s'il détermine que la variation est inférieure au seul bas ou supérieur au seuil haut.

La Fig. 5 représente les étapes du procédé pour relayer un signal de balise ou un signal de trafic d'une communication établie entre appareils de communication.

Le procédé est, selon un mode de réalisation, un ensemble d'instructions d'un programme qui est mis en oeuvre par des moyens logiciels de l'un des dispositifs D2 tels que décrit en relation la Fig. 4.

Le procédé comporte une étape 100 de réception par au moins une antenne AEi d'un signal de balise ou de trafic, une étape 200 pour générer un signal, dit relayé, à partir du signal reçu, et une étape 300 d'émission par chaque antenne AEi du signal ainsi relayé. Le niveau de puissance du signal relayé Psei qui est émis par chaque antenne AEi est égal à un pourcentage du niveau de puissance total Pse du signal relayé.

Selon un mode de réalisation, le pourcentage du niveau de puissance du signal relayé qui est émis par une antenne est plus élevé que les pourcentages du niveau de puissance du signal relayé qui sont émis par les autres antennes.

Selon une variante de ce mode de réalisation, les pourcentages du niveau de puissance du signal relayé qui sont émis par lesdites autres antennes sont tous égaux à une même valeur b comme on le verra plus tard.

Selon un mode de réalisation, le procédé comporte une étape 400 de détermination de l'environnement Ei dans lequel se trouve un appareil à l'origine de l'émission d'un signal reçu par au moins une des antennes AEi.

De préférence, au cours de ladite étape 400, le niveau de puissance du signal reçu Pse est mesuré par antenne par les moyens MES du dispositif D2 et les niveaux de puissance ainsi mesurés sont comparés entre eux par les moyens COMP. Une antenne de réception est alors sélectionnée par les moyens SEL, par exemple l'antenne AEi du dispositif D2, sur laquelle a été mesuré le niveau de puissance le plus élevé. L'environnement Ei dans lequel se trouve l'appareil est celui qui est relatif à l'antenne de réception ainsi sélectionnée, en l'occurrence l'antenne AEi.

De préférence, l'étape 400 est réalisée à chaque réception d'un signal sur au moins l'une des antennes AEi.

Avantageusement, le procédé comporte une étape 500 de visualisation au cours de laquelle est visualisé l'environnement dans lequel se trouve un appareil de communication.

Selon une variante de ce mode de réalisation, le procédé comporte une étape 600 de détection de changement d'environnement d'un appareil de communication.

De préférence, au cours de l'étape 600, les moyens DETER sont mis en oeuvre afin de déterminer le nouvel environnement Em dans lequel se trouve cet appareil. On peut noter que pour cela l'étape 400 est mise en oeuvre et qu'à l'issue de cette étape, l'antenne de réception AEm relative à ce nouvel environnement Em a été sélectionnée. Le nouvel environnement Em est ensuite comparé à l'environnement EiM dans lequel se trouvait jusque là l'appareil de communication. Cet environnement EiM a été mémorisé lors d'une précédente étape 600. Dans le cas où les environnements EiM et Em sont différents, l'appareil est alors détecté comme ayant changé d'environnement.

Avantageusement, suite à la détection de changement d'environnement d'un appareil de communication, le procédé comporte une étape 700 d'adaptation du niveau de puissance d'émission de l'appareil ainsi détecté comme ayant changé d'environnement. Au cours de l'étape 700, le niveau de puissance du signal mesuré sur l'antenne de réception AEm, c'est-à-dire celle sur laquelle le niveau de puissance mesuré est le plus élevé, est comparé à une valeur prédéterminée Th afin d'adapter le niveau de puissance d'émission Pe, de l'appareil de communication à l'origine de l'émission du signal reçu sur l'antenne AEm, au nouvel environnement dans lequel se trouve cet appareil.

De préférence, au cours de l'étape 700, un signal, dit d'indication de niveau de puissance d'émission, préférentiellement d'un service CLMS, est émis sur l'antenne de réception de cet appareil de communication afin que cet appareil de communication adapte son niveau de puissance d'émission au nouvel environnement Em.

Selon une variante, le signal d'indication de niveau de puissance, porte la valeur du niveau de puissance d'émission que l'appareil de communication doit dès lors utiliser dans l'environnement Em, et, selon une autre variante, le signal d'indication de niveau de puissance porte une information indiquant à cet appareil de communication qu'il doit adapter son niveau de puissance d'émission sans pour cela préciser ce nouveau niveau de puissance. Ce nouveau niveau de puissance est, par exemple, mémorisé par l'appareil.

Avantageusement, suite à la détection de changement d'environnement d'une base, le procédé comporte une étape 800 pour prévenir les appareils de communications qui sont synchronisés à partir du signal de balise émis par ladite base de se synchroniser sur ce signal de balise une fois relayé.

En d'autres termes, une base C se trouvant dans l'environnement E1, émet un signal de balise (non relayé) qui est reçu par les autres appareils de communication situés également dans l'environnement E1. Lorsque la base C change d'environnement pour aller dans l'environnement E2, la base C indique aux autres appareils de communication se trouvant dans l'environnement E1 et qui sont synchronisés avec ce signal de balise non relayé qu'ils doivent recevoir le signal de balise relayé via l'antenne AE1 et non plus le signal de balise non relayé. Pour cela, la base C connaît les appareils de communication qui sont synchronisés sur le signal de balise qu'elle émet car la base C maintient à jour une liste de ces appareils de communication comme expliqué précédemment.

A des fins d'illustrations du procédé mis en oeuvre par l'un des dispositifs D2, considérons le cas d'un réseau DECT utilisé pour la communication radiofréquence entre des appareils de communication situés dans différents environnements Ei à relayer.

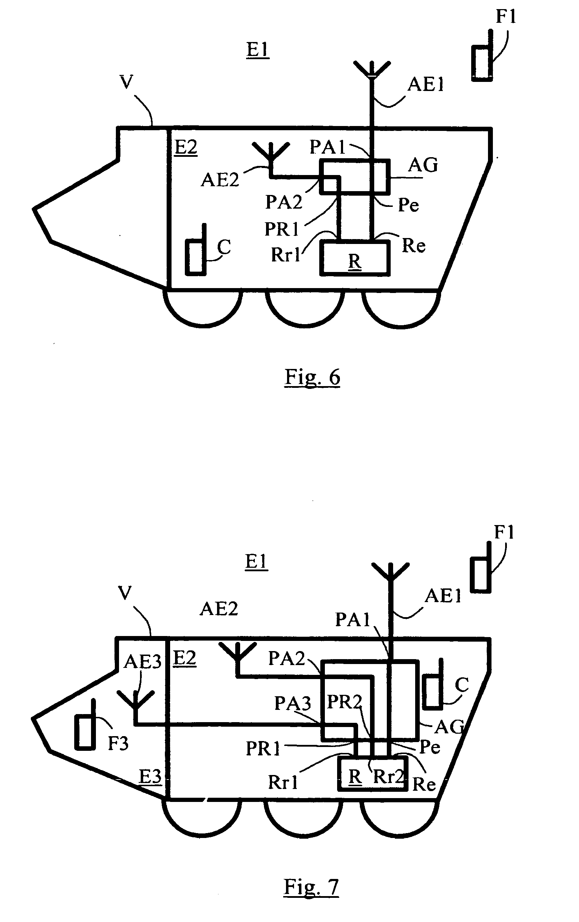

La Fig. 6 représente schématiquement un exemple d'utilisation du dispositif D2 pour relayer deux environnements E1 et E2 qui sont par exemple l'extérieur et l'intérieur du véhicule V.

Le dispositif D2 est conforme à l'un de ceux décrits en relation avec la Fig. 4. Il comporte, selon cet exemple, deux antennes AE1 et AE2 chacune positionnée dans un environnement à relayer, en l'occurrence les environnements E1 et E2, un appareil d'aiguillage radiofréquence AG dont la structure interne en émission est conforme à la Fig. 3a et en réception est conforme à la Fig. 3b. L'appareil d'aiguillage AG comporte, selon cet exemple, un port d'antenne PA1 relié à l'antenne AE1, un port d'antenne PA2 relié à l'antenne AE2, un port de réception relais PR1 et un port émission relais Pe.

Le dispositif D2 comporte également un relais R conforme à la Fig. 2 prévu pour recevoir un signal de balise ou de trafic sur un couple slot / fréquence, par exemple sur des slots pairs d'une trame TDMA, et pour générer un signal relayé sur un autre couple slot / fréquence par exemple sur des slots impairs. De plus, le relais R comporte un port de réception Rr1 relié au port de réception PR1 et un port d'émission Re relié au port d'émission relais Pe.

Considérons tout d'abord le cas où la base C est située dans l'environnement E2 et où un appareil de communication F1 est situé dans l'environnement E1. La base C, qui est prévue pour remplir les fonctions d'une base DECT, émet sur un slot pair d'une trame TDMA, un signal de balise Sb qui est reçu par l'antenne AE2 (étape 100) et donc sur le port d'antenne PA2 de l'appareil d'aiguillage radiofréquence AG. Le signal de balise Sb est alors acheminé jusqu'au port PR1 de l'appareil d'aiguillage radiofréquence AG puis jusqu'au port Rr1 du relais R qui est synchronisé avec ce signal de balise Sb. On peut noter que le signal de balise Sb reçu par l'appareil d'aiguillage radiofréquence AG est intégralement acheminé au relais R. De plus, le signal de balise Sb étant reçu uniquement par l'antenne AE2, le niveau de puissance mesuré sur l'antenne AE2 est le plus élevé. La base C est par conséquent considérée comme étant à l'intérieur du véhicule V (étape 400).

Le relais R relaie le signal Sb qui est alors émis sur des slots impairs de trames TDMA via le port Re. Le signal de balise Sb relayé est alors reçu par le port Pe de l'appareil d'aiguillage AG. Le signal de balise Sb relayé est alors acheminé jusqu'aux ports d'antenne PA1 et PA2 grâce à la structure interne de l'appareil d'aiguillage radiofréquence AG en émission (étape 300). Par exemple, le niveau de puissance du signal de balise Sb relayé qui est acheminé jusqu'au port d'antenne PA2 est égal à 1% du niveau de puissance total du signal de balise relayé Sb et le niveau de puissance du signal de balise Sb relayé qui est acheminé jusqu'au port d'antenne PA1 est égal à 99% du niveau de puissance total du signal de balise relayé Sb. Ainsi, le signal balise Sb relayé est émis sur les slots impairs d'une trame TDMA simultanément par l'antenne AE1 et par l'antenne AE2. On peut noter que selon cet exemple d'utilisation, le niveau de puissance du signal de balise Sb relayé qui est acheminé jusqu'au port d'antenne PA1 est très supérieur à celui du signal de balise Sb relayé qui est acheminé jusqu'au port d'antenne PA2 afin de limiter les combinaisons destructrices des ondes émises simultanément par les deux antennes. Cette configuration est possible car l'habitacle du véhicule est un espace très réduit et il ne nécessite qu'une faible puissance d'émission.

On comprendra qu'un signal de trafic émis sur un slot pair est relayé de manière similaire par le dispositif.

Regardons maintenant comment le dispositif selon l'invention permet que le signal de balise soit reçu en continu par l'appareil F1 dans le cas où, soit l'appareil F1, soit la base C change d'environnement.

Prenons le cas où l'appareil F1 et la base C ne se trouvent pas dans le même environnement tel que illustré à la Fig. 6. La base C émet le signal de balise Sb sur lequel le relais R est synchronisé. L'appareil F1 est alors synchronisé sur le signal de balise relayé.

Supposons que la base C change d'environnement pour aller dans l'environnement E1. Le dispositif D2, qui mesure le niveau de puissance du signal reçu par chaque port antenne, va alors constater que le signal est plus fort sur l'antenne AE1 et sélectionner ce port d'antenne comme port de réception du signal de balise Sb. Comme chacune des antennes est dédiée à un environnement, le dispositif D2 permet de déterminer le nouvel environnement dans lequel se trouve maintenant la base C, en l'occurrence l'extérieur du véhicule V (étape 400) pour être visualisé (étape 500) et mémorisé. La base C est alors détectée comme ayant changé d'environnement (étape 600).

Suite à ce changement, le.dispositif D2 informe la base C qu'elle doit adapter son niveau de puissance d'émission du signal de balise à l'environnement E1 (étape 700).

Le changement d'environnement de la base C est transparent pour l'appareil F1 qui continue de recevoir le signal de balise relayé via l'antenne AE2. On peut noter que l'appareil F1 peut également choisir de recevoir le signal de balise Sb émis directement par la base C si ce signal est plus fort que celui reçu via l'antenne AE2. A ce moment-là, l'appareil F1 réalise un *handover* pour

recevoir le signal de balise Sb non relayé (étape 800).

Prenons le cas où l'appareil F1 et la base C ne se trouvent pas dans le même environnement tel que illustré à la Fig. 6. La base C émet le signal de balise Sb sur lequel le relais R est synchronisé. L'appareil F1 est alors synchronisé sur le signal de balise relayé Sr.

Supposons que l'appareil F1 change d'environnement. Le dispositif D2 détecte que l'appareil de communication F1 a changé d'environnement lorsque suite à la réception d'un message de l'appareil F1, de préférence CLMS, par le dispositif D2, ledit message est reçu sur l'antenne correspondante à l'environnement dans lequel se trouve l'appareil de communication F1. Le dispositif D2 demande alors à l'appareil F1 d'adapter son niveau de puissance d'émission à l'environnement E2 (étape 700). Au cours du changement d'environnement, l'appareil de communication F1 ne subit pas de rupture de réception du signal de balise relayé Sr grâce au fait que ledit signal de balise est émis simultanément sur les antennes AE1 et AE2.

Prenons le cas où l'appareil F1 et la base C se trouvent dans le même environnement E2. La base C émet le signal de balise Sb sur lequel le relais R et l'appareil F1 sont synchronisés.

Supposons que la base C ait été détectée comme ayant changé d'environnement (étape 600).

Le dispositif D2 émet alors un signal à la base C lui demandant de prévenir l'appareil F1 de se synchroniser sur le signal de balise relayé Sr et l'appareil F1 réalise alors un *handover* pour recevoir le signal de balise relayé Sr (étape 800). Le fait que le relais R et l'appareil F1 soient synchronisés sur le même signal de balise Sb, permet à l'appareil F1 d'effectuer un 'saut' (*handover*) du signal de balise non relayé Sb vers le signal de balise relayé Sr sans rupture de réception du signal de balise par l'appareil F1.

De plus, la base C est informée qu'elle doit adapter son niveau de puissance d'émission du signal de balise à l'environnement E1 (étape 700).

Prenons maintenant le cas où l'appareil F1 et la base C se trouvent dans le même environnement E2. La base C émet le signal de balise Sb sur lequel le relais R et l'appareil F1 sont synchronisés.

Supposons que l'appareil F1 change d'environnement, c'est-à-dire qu'il sort du véhicule V. Le niveau de puissance du signal de balise Sb reçu par l'appareil F1 va alors changer brutalement et la variation de ce niveau de puissance devient alors inférieure à un seuil prédéterminé, dit seuil bas. De même, on comprendra que si l'appareil F1 entre dans le véhicule, la variation du niveau de puissance du signal Sb devient alors supérieure à un seuil prédéterminé, dit seuil haut. L'appareil F1 va alors détecter qu'il sort du véhicule et mémoriser ce nouvel environnement. Dès lors il effectue un handover sur le signal Sr.

L'appareil F1 qui recevait jusqu'alors le signal de balise non relayé Sb via l'antenne AE2 reçoit maintenant le signal de balise relayé Sr via l'antenne AE1. Il n'y a pas rupture de réception du signal de balise Sb étant donné que le signal de balise Sb et le signal de balise relayé Sr sont synchrones entre eux.

L'appareil F1 ayant détecté qu'il a changé d'environnement, adapte son niveau de puissance d'émission à l'environnement E1 (étape 700).

La Fig. 7 représente schématiquement un exemple d'utilisation du dispositif D2 pour relayer trois environnements E1, E2 et E3 qui sont respectivement l'extérieur du véhicule V, le compartiment de transport de troupe et la cabine de pilotage du véhicule V. Le compartiment de transport de troupe et la cabine de pilotage sont séparés par un blindage qui ne permet pas aux ondes radiofréquences de se propager d'un environnement à l'autre sans être très atténuées.

Les références des éléments de la Fig. 7 qui sont identiques aux références de la Fig. 6 désignent les mêmes éléments.

Le dispositif D2 est conforme à l'un de ceux décrits en relation avec la Fig. 4. Il comporte, selon cet exemple, trois antennes AE1, AE2 et AE3 chacune positionnée dans un environnement à relayer, en l'occurrence les environnements E1, E2 et E3, un appareil d'aiguillage radiofréquence AG dont la structure interne en émission est conforme à la Fig. 3a et est conforme à la Fig. 3b en réception. L'appareil d'aiguillage AG comporte, selon cet exemple, un port d'antenne PA1 relié à l'antenne AE1, un port d'antenne PA2 relié à l'antenne AE2, un port d'antenne PA3 relié à l'antenne AE3, deux ports de réception relais PR1 et PR2 et un port émission relais Pe.

Le dispositif D2 comporte également un relais R conforme à la Fig. 2 prévu pour recevoir un signal de balise ou de trafic sur un couple slot / fréquence, par exemple sur des slots pairs d'une trame TDMA, et pour générer un signal relayé sur un autre couple slot / fréquence par exemple sur des slots impairs. De plus, le relais R comporte un port de réception Rr1 relié au port de réception PR1, un port de réception Rr2 relié au port de réception PR2 et un port d'émission Re relié au port d'émission relais Pe.

Considérons tout d'abord le cas où la base C est située dans l'environnement E2 et où un appareil de communication F1 est situé dans l'environnement E1 et un appareil de communication est situé dans l'environnement E3. La base C émet sur un slot pair d'une trame TDMA un signal de balise Sb qui est reçu par l'antenne AE2 (étape 100) et donc sur le port d'antenne PA2 de l'appareil d'aiguillage radiofréquence AG. Le signal de balise Sb est alors acheminé jusqu'au port PR2 de l'appareil d'aiguillage radiofréquence AG puis jusqu'au port Rr2 du relais R qui est synchronisé avec ce signal de balise Sb. On peut noter que le signal de balise Sb reçu par l'appareil d'aiguillage radiofréquence AG est intégralement acheminé au relais R. De plus, le signal de balise Sb étant reçu uniquement par l'antenne AE2, le niveau de puissance mesuré sur l'antenne AE2 est le plus élevé. La base C est par conséquent considérée comme étant dans le compartiment de transport de troupe du véhicule V (étape 400).

Le relais R relaie le signal Sb qui est alors émis sur des slots impairs de trames TDMA via le port Re. Le signal de balise Sb relayé est alors reçu par le port Pe de l'appareil d'aiguillage AG. Le signal de balise Sb relayé est alors acheminé jusqu'aux ports d'antenne PA1, PA2 et PA3 grâce à la structure interne de l'appareil d'aiguillage radiofréquence AG (étape 300). Par exemple, le niveau de puissance du signal de balise Sb relayé qui est acheminé jusqu'aux ports d'antenne PA2 et PA3 est égal à 1% du niveau de puissance total du signal de balise relayé Sb et le niveau de puissance du signal de balise Sb relayé qui est acheminé jusqu'au port d'antenne PA1 est égal à 98% du niveau de puissance total du signal de balise relayé Sb. Ainsi, le signal balise Sb relayé est émis sur les slots impairs d'une trame TDMA simultanément par l'antenne AE1, par l'antenne AE2 et par l'antenne AE3.

On comprendra qu'un signal de trafic émis sur un slot pair est relayé de manière similaire par le dispositif et que les cas de changement d'environnement d'un appareil de communication décrits en relation avec la Fig. 6 s'appliquent quel que soit le nombre d'environnements à relayer.

## Revendications

1. Dispositif pour relayer un signal de balise ou un signal de trafic d'une communication radiofréquence établie entre des appareils de communication susceptibles de se déplacer d'un environnement à un autre, lesdits environnements ne permettant pas aux ondes radiofréquences relatives à cette communication de se propager d'un environnement à l'autre sans être très atténuées, chaque appareil de communication étant prévu pour mettre en oeuvre un mécanisme de diversité d'antennes, ledit dispositif comportant une pluralité d'antennes (AEi) destinées à recevoir un signal et un relais radiofréquence (R) destiné à relayer un signal reçu par une antenne positionnée dans l'un desdits environnements vers une autre antenne positionnée dans un autre environnement, le dispositif est **caractérisé en ce qu'**il comporte un appareil (AG), dit d'aiguillage radiofréquence, qui comporte

   - au moins un port (PRj), dit port réception relais, qui est relié à un port de réception (Rrk) du relais radiofréquence (R) et qui fonctionne en réception,
   - un port (Pe), dit port émission relais, qui est relié à un port d'émission (Re) du relais radiofréquence (R) et qui fonctionne en émission,
   - autant de ports (PAi), dits ports d'antenne, que d'environnements à relayer, chaque port d'antenne (PAi) étant relié à une antenne d'un environnement, et étant en relation avec au moins un port réception relais (PRj),

ledit appareil d'aiguillage radiofréquence (AG) étant prévu pour qu'un signal reçu sur un des ports d'antenne (PAi) soit acheminé intégralement à un port réception relais (PRj), et que lorsqu'un signal relayé est reçu sur le port d'émission relais (Pe), ledit signal est simultanément acheminé jusqu'à chaque port d'antenne (PAi), le niveau de puissance (PSei) du signal relayé sur chaque port d'antenne (PAi) étant égal à un pourcentage (ai) du niveau de puissance total (Pse) du signal relayé.

2. Dispositif selon la revendication 1, **caractérisé en ce que** l'appareil d'aiguillage radiofréquence est prévu pour que le pourcentage du niveau de puissance du signal relayé qui est acheminé jusqu'à un port d'antenne soit plus élevé que les pourcentages du niveau de puissance du signal relayé qui est acheminé jusqu'à chaque autre port d'antenne.

3. Dispositif selon la revendication 2, **caractérisé en ce que** l'appareil d'aiguillage radiofréquence est prévu pour que les pourcentages du niveau de puissance du signal relayé qui est acheminé jusqu'aux dits autres ports d'antenne soient tous égaux à une même valeur (b).

4. Dispositif selon l'une des revendications 1 à 3, **caractérisé en ce que** le port émission relais (Pe), lors d'une émission, est relié à tous les ports d'antenne (PAi) avec des niveaux d'émission adaptés à chacun des environnements, alors qu'en mode réception, chaque port réception relais (PRj) est relié directement à un seul port d'antenne.

5. Dispositif selon l'une des revendications 1 à 3, **caractérisé en ce que** lors d'une émission, le port émission relais (Pe) est relié à tous les ports d'antenne (PAi) avec des niveaux d'émission adaptés à chacun des environnements, alors qu'en mode réception, au moins un port réception relais (PRj) est relié à plus d'un port d'antenne (PAi).

6. Dispositif selon l'une des revendications précédentes, **caractérisé en ce qu'**il comporte des moyens (DETER) pour déterminer dans quel environnement se trouve un appareil à l'origine de l'émission d'un signal reçu par au moins un des ports d'antenne (PAi).

7. Dispositif selon la revendication 6, **caractérisé en ce que** lesdits moyens (DETER) pour déterminer dans quel environnement se trouve un appareil se composent de moyens (MES) pour mesurer par antenne le niveau de puissance dudit signal reçu, des moyens (COMP) pour comparer entre eux les niveaux de puissance ainsi mesurés et des moyens (SEL) pour sélectionner comme antenne de réception pour ledit appareil l'antenne sur laquelle a été mesuré le niveau de puissance le plus élevé, l'environnement dans lequel se trouve l'appareil étant déterminé comme étant celui dans lequel se trouve ladite antenne de réception ainsi sélectionnée.

8. Dispositif selon la revendication 6 ou 7, **caractérisé en ce qu'**il comporte des moyens (VISU) pour visualiser l'environnement dans lequel se trouve chaque appareil de communication.

9. Dispositif selon l'une des revendications 6 à 8, **caractérisé en ce qu'**il comporte des moyens (DETEC) pour détecter que ledit appareil à l'origine de l'émission du signal reçu change d'environnement.

10. Dispositif selon la revendication 9, **caractérisé en ce qu'**il comporte une mémoire (MEM) prévue pour mémoriser l'environnement préalablement déterminé dans lequel se trouve ledit appareil et des moyens (COMPA) pour comparer ledit environnement ainsi mémorisé avec l'environnement nouvellement déterminé dans lequel se trouve ledit appareil, l'appareil étant détecté comme ayant changé d'environnement si l'environnement préalablement mémorisé et l'environnement nouvellement déterminé sont différents.

11. Dispositif selon l'une des revendications 9 à 10, l'appareil de communication ainsi détecté comme ayant changé d'environnement et émettant un signal de balise, **caractérisé en ce qu'**il comporte des moyens (ORD) pour ordonner audit appareil de communication de déclencher des moyens pour prévenir les appareils de communication qui sont synchronisés à partir du signal de balise émis par ledit appareil, de se synchroniser sur le signal de balise relayé par ledit dispositif.

12. Dispositif selon la revendication 9 ou 11, **caractérisé en ce qu'**il comporte des moyens (ANP) pour ordonner audit appareil ainsi détecté comme ayant changé d'environnement d'adapter son niveau de puissance d'émission selon le nouvel environnement dans lequel il se trouve.

13. Système de communication comportant une pluralité d'appareils de communication susceptibles de se déplacer d'un environnement à un autre, lesdits environnements ne permettant pas aux ondes radiofréquences relatives à une communication entre lesdits appareils de se propager d'un environnement à l'autre sans être très atténuées, chaque appareil de communication étant prévu pour mettre en oeuvre un mécanisme de diversité d'antennes, **caractérisé en ce qu'**il comporte un dispositif conforme à l'une des revendications 1 à 12, pour relayer ladite communication radiofréquence d'un environnement à l'autre.

14. Procédé pour relayer un signal de balise ou un signal de trafic d'une communication radiofréquence établie entre des appareils de communication susceptibles de se déplacer d'un environnement à un autre, lesdits environnements ne permettant pas aux ondes radiofréquences relatives à cette communication de se propager d'un environnement à l'autre sans être très atténuées, une antenne étant située dans chaque environnement, chaque appareil de communication étant prévu pour mettre en oeuvre un mécanisme de diversité d'antennes, le procédé est **caractérisé en ce qu'**il comporte une étape (100) de réception par au moins une antenne du signal de balise ou de trafic, une étape (200) pour générer un signal, dit relayé, à partir du signal reçu, et une étape (300) d'émission simultanée par chaque antenne du signal relayé, le niveau de puissance du signal relayé qui est émis par antenne étant égal à un pourcentage du niveau de puissance total du signal relayé.

15. Procédé selon la revendication 14, **caractérisé en ce qu'**il comporte une étape (400) de détermination de l'environnement dans lequel se trouve un appareil à l'origine de l'émission d'un signal reçu par au moins une des antennes.

16. Procédé selon l'une des revendications 14 à 15, **caractérisé en ce qu'**il comporte une étape (600) de détection de changement d'environnement d'un appareil de communication.

17. Procédé selon la revendication 16, **caractérisé en ce qu'**il comporte une étape (700) d'adaptation du niveau de puissance d'émission dudit appareil ainsi déterminé comme ayant changé d'environnement au cours de laquelle le niveau de puissance d'un signal mesuré le plus élevé est comparé à une valeur prédéterminée (Th) afin d'adapter le niveau de puissance d'émission de l'appareil de communication à l'origine de l'émission du signal reçu au nouvel environnement dans lequel se trouve cet appareil.

18. Procédé selon l'une des revendications 14 à 17, au moins l'un desdits appareils de communication, dit base, diffusant un signal de balise, **caractérisé en ce qu'**il comporte une étape (800) pour prévenir les appareils de communications synchronisés sur ledit signal de balise émis par ladite base de se synchroniser sur ce signal de balise une fois relayé, une fois que ladite base a été déterminée comme ayant changé d'environnement.

19. Programme d'ordinateur stocké sur un support d'informations, ledit programme comportant des instructions permettant de mettre en oeuvre le procédé selon l'une des revendications 14 à 18, lorsqu'il est chargé et exécuté par un dispositif conforme à l'une des revendications 1 à 12.

## Claims

1. Device for relaying a beacon signal or a traffic signal of a radio-frequency communication established between communication apparatuses liable to move from one environment to another, the said environments not enabling the radio-frequency waves relating to this communication to propagate from one environment to the other without being highly attenuated, each communication apparatus being designed to use an antenna diversity mechanism, the said device comprising a plurality of antennas (AEi) intended to receive a signal and a radio-frequency relay (R) intended to relay a signal received by an antenna positioned in one of the said environments to another antenna positioned in another environment, the device being **characterised in that** it comprises an apparatus (AG), referred to as a radio-frequency switching apparatus, which comprises

   - at least one port (PRj), referred to as the relay reception port, which is connected to a reception port (Rrk) of the radio-frequency relay (R) and functions in reception mode,
   - a port (Pe), referred to as the relay transmission port, which is connected to a transmission port (Re) of the radio-frequency relay (R) and functions in transmission mode,
   - as many ports (PAi), referred to as antenna ports, as there are environments to be relayed, each antenna port (PAi) being connected to an antenna of an environment and being connected with at least one relay reception port (PRj),

   the said radio-frequency switching apparatus (AG) being designed so that a signal received on one of the antenna ports (PAi) is entirely routed to a relay reception port (PRj), and so that, when a relayed signal is received on the relay transmission port (Pe), the said signal is simultaneously routed to each antenna port (PAi), the power level (PSei) of the signal relayed on each antenna port being equal to a percentage (ai) of the total power level (Pse) of the relayed signal.

2. Device according to claim 1, **characterised in that** the radio-frequency switching apparatus is designed so that the percentage of the power level of the relayed signal that is routed to an antenna port is higher than the percentages of the power level of the relayed signal that is routed to each other antenna port.

3. Device according to claim 2, **characterised in that** the radio-frequency switching apparatus is designed so that the percentages of the power level of the relayed signal that is routed to the said other antenna ports are all equal to the same value (b).

4. Device according to one of claims 1 to 3, **characterised in that** the relay transmission port (Pe), during a transmission, is connected to all the antenna ports (PAi) with transmission levels adapted to each of the environments, whereas in reception mode each relay reception port (PRj) is connected directly to a single antenna port.

5. Device according to one of claims 1 to 3, **characterised in that**, during a transmission, the relay transmission port (Pe) is connected to all the antenna ports (PAi) with transmission levels adapted to each of the environments, whereas in reception mode at least one relay reception port (PRj) is connected to more than one antenna port (PAi).

6. Device according to one of the preceding claims, **characterised in that** it comprises means (DETER) for determining in which environment an apparatus at the origin of the transmission of a signal received by at least one of the antenna ports (PAi) is situated.

7. Device according to claim 6, **characterised in that** the said means (DETER) for determining in which environment an apparatus is situated is composed of means (MES) for measuring per antenna the power level of the said received signal, means (COMP) for comparing with each other the power levels thus measured and means (SEL) for selecting as the reception antenna for the said apparatus the antenna on which the highest power level was measured, the environment in which the apparatus is situated being determined as being the one in which the said reception antenna thus selected is situated.

8. Device according to claim 6 or 7, **characterised in that** it comprises means (VISU) for displaying the environment in which each communication apparatus is situated.

9. Device according to one of claims 6 to 8, **characterised in that** it comprises means (DETEC) for detecting that the said apparatus at the origin of the transmission of the received signal is changing environment.

10. Device according to claim 9, **characterised in that** it comprises a memory (MEM) designed to store the previously determined environment in which the said apparatus is situated and means (COMPA) for comparing the said environment thus stored with the newly determined environment in which the said apparatus is situated, the apparatus being detected as having changed environment if the previously stored environment and the newly determined environment are different.

11. Device according to one of claims 9 to 10, the communication apparatus being thus detected as having changed environment and transmitting a beacon signal, **characterised in that** it comprises means (ORD) for ordering said communication apparatus to trigger means for warning the communication apparatuses that are synchronised from the beacon signal transmitted by the said apparatus to synchronise on the beacon signal relayed by the said device.

12. Device according to claim 9 or 11, **characterised in that** it comprises means (ANP) for ordering the said apparatus thus detected as having changed environment to adapt its transmission power level according to the new environment in which it is situated.

13. Communication system comprising a plurality of communication apparatuses liable to move from one environment to another, the said environments not enabling the radio-frequency waves relating to a communication between the said apparatuses to propagate from one environment to another without being highly attenuated, each communication apparatus being designed to use an antenna diversity mechanism, **characterised in that** it comprises a device according to one of claims 1 to 12 for relaying the said radio-frequency communication from one environment to another.

14. Method for relaying a beacon signal or a traffic signal of a radio-frequency communication established between communication apparatuses liable to move from one environment to another, the said environments not enabling the radio-frequency waves relating to this communication to propagate from one environment to another without being highly attenuated, an antenna being positioned in each environment, each communication apparatus being designed to use an antenna diversity mechanism, the method being **characterised in that** it comprises a step (100) of reception by at least one antenna of the beacon or traffic signal, a step (200) for generating a signal, referred to as the relayed signal, from the signal received, and a step (300) of simultaneous transmission of the relayed signal by each antenna, the power level of the relayed signal that is transmitted per antenna being equal to a percentage of the total power level of the relayed signal.

15. Method according to claim 14, **characterised in that** it comprises a step (400) of determining the environment in which an apparatus at the origin of the transmission of a signal received by at least one of the antennas is situated.

16. Method according to one of claims 14 to 15, **characterised in that** it comprises a step (600) of detecting a change in environment of a communication apparatus.

17. Method according to claim 16, **characterised in that** it comprises a step (700) of adapting the transmission power level of the said apparatus thus determined as having changed environment during which the power level of a highest measured signal is compared with a predetermined value (Th) in order to adapt the transmission power level of the communication apparatus at the origin of the transmission of the received signal to the new environment in which this apparatus is situated.

18. Method according to one of claims 14 to 18, at least one of the said communication apparatuses, referred to as the base, broadcasting a beacon signal, **characterised in that** it comprises a step (800) for warning the communication apparatuses synchronised on the said beacon signal transmitted by the said base to synchronise on this beacon signal once relayed, once the said base has been determined as having changed environment.

19. Computer program stored on an information carrier, the said program containing instructions for implementing the method according to one of claims 14 to 18 when it is loaded into and executed by a device according to one of claims 1 to 12.

**Patentansprüche**

1. Vorrichtung zum Weiterleiten eines Bakensignals oder eines Verkehrssignals einer Hochfrequenzkommunikation, die zwischen Kommunikationsvorrichtungen hergestellt wurde, die sich von einer Umgebung in eine andere bewegen können, wobei die Umgebungen den auf diese Kommunikation bezogenen Hochfrequenzwellen keine Ausbreitung von einer Umgebung in die andere ohne starke Dämpfung erlauben, wobei jede Kommunikationsvorrichtung dazu vorgesehen ist, einen Antennendiversitätsmechanismus in Gang zu setzen, wobei die Vorrichtung eine Vielzahl von Antennen (AEi), die dazu bestimmt sind, ein Signal zu empfangen, und ein Hochfrequenzrelais (R) aufweist, das dazu bestimmt ist, ein Signal, das von einer in einer der Umgebungen befindlichen Antenne empfangen wurde, zu einer anderen, in einer anderen Umgebung befindlichen Antenne weiterzuleiten, wobei die Vorrichtung **dadurch gekennzeichnet ist, dass** sie eine als Hochfrequenzweiche bezeichnete Einrichtung (AG) aufweist, die Folgendes enthält:

- mindestens einen als Empfangsrelais-Port bezeichneten Port (PRj), der mit einem Empfangs-Port (Rrk) des Hochfrequenzrelais (R) verbunden ist und beim Empfangen arbeitet,

- einen als Senderelais-Port bezeichneten Port (Pe), der mit einem Sende-Port (Re) des Hochfrequenzrelais (R) verbunden ist und beim Senden arbeitet,

- ebenso viele als Antennen-Ports bezeichnete Ports (PAi), wie Umgebungen für die Weiterleitung vorhanden sind, wobei jeder Antennen-Port (PAi) mit einer Antenne einer Umgebung verbunden ist und mit mindestens einem Empfangsrelais-Port (PRj) in Beziehung steht,

wobei die Hochfrequenzweicheneinrichtung (AG) dazu vorgesehen ist, ein Signal, das an einem der Antennen-Ports (PAi) empfangen wird, vollständig zu einem Empfangsrelais-Port (PRj) weiterzuleiten, und dass dann, wenn ein weitergeleitetes Signal an dem Senderelais-Port (Pe) empfangen wird, das Signal gleichzeitig zu jedem Antennen-Port (PAi) weitergeleitet wird, wobei der Signalleistungspegel des weitergeleiteten Signals (PSei) an jedem Antennen-Port (PAi) einem Prozentwert (ai) des Gesamtleistungspegels (Pse) des weitergeleiteten Signals entspricht.

2. Vorrichtung nach Anspruch 1, **dadurch gekennzeichnet, dass** die Hochfrequenzweicheneinrichtung dazu vorgesehen ist, dass der Prozentwert des Leistungspegels des weitergeleiteten Signals, das bis zu einem Antennen-Port weitergeleitet wird, höher ist als die Prozentwerte des Leistungspegels des weitergeleiteten Signals, das bis zu jedem anderen Antennen-Port weitergeleitet wird.

3. Vorrichtung nach Anspruch 2, **dadurch gekennzeichnet, dass** die Hochfrequenzweicheneinrichtung dazu vorgesehen ist, dass sämtliche Prozentwerte des Leistungspegels des weitergeleiteten Signals, das bis zu den anderen Antennen-Ports weitergeleitet wird, denselben Wert (b) haben.

4. Vorrichtung nach einem der Ansprüche 1 bis 3, **dadurch gekennzeichnet, dass** der Senderelais-Port (Pe) während eines Sendevorgangs mit allen Antennen-Ports (PAi) mit Sendepegeln verbunden ist, die an jede der Umgebungen angepasst sind, während im Empfangsmodus jeder Empfangsrelais-Port (Prj) direkt mit einem einzigen Antennen-Port verbunden ist.

5. Vorrichtung nach einem der Ansprüche 1 bis 3, **dadurch gekennzeichnet, dass** während eines Sendevorgangs der Senderelais-Port (Pe) mit allen Antennen-Ports (PAi) mit Sendepegeln verbunden ist, die an jede der Umgebungen angepasst sind, während im Empfangsmodus mindestens ein Empfangsrelais-Port (PRj) mit mehr als einem Antennen-Port (PAi) verbunden ist.

6. Vorrichtung nach einem der vorhergehenden Ansprüche, **dadurch gekennzeichnet, dass** sie Mittel (DETER) umfasst, um festzustellen, in welcher Umgebung sich eine Vorrichtung am Ursprungsort des Sendevorgangs eines Signals befindet, das von mindestens einem der Antennen-Ports (PAi) empfangen wurde.

7. Vorrichtung nach Anspruch 6, **dadurch gekennzeichnet, dass** die Mittel (DETER) zum Feststellen, in welcher Umgebung sich eine Vorrichtung befindet, sich aus Mitteln (MES) zum Messen des Leistungspegels des empfangenen Signals pro Antenne, Mitteln (COMP) zum Vergleichen der auf diese Weise gemessenen Leistungspegel untereinander und Mitteln (SEL) zum Auswählen derjenigen Antenne als Empfangsantenne für die Vorrichtung zusammensetzen, an der der höchste Leistungspegel gemessen wurde, wobei die Umgebung, in der sich die Vorrichtung befindet, als diejenige ermittelt wird, in der sich die auf diese Weise ausgewählte Empfangsantenne befindet.

8. Vorrichtung nach Anspruch 6 oder 7, **dadurch gekennzeichnet, dass** sie Mittel (VISU) zum Darstellen der Umgebung umfasst, in der sich jede Kommunikationsvorrichtung befindet.

9. Vorrichtung nach einem der Ansprüche 6 bis 8, **dadurch gekennzeichnet, dass** sie Mittel (DETEC) umfasst, um zu erfassen, dass die Vorrichtung am Ursprungsort des Sendevorgangs des empfangenen Signals die Umgebung wechselt.

10. Vorrichtung nach Anspruch 9, **dadurch gekennzeichnet, dass** sie einen Speicher (MEM), der dazu vorgesehen ist, die vorher ermittelte Umgebung zu speichern, in der sich die Vorrichtung befindet, und Mittel (COMPA) aufweist, um die auf diese Weise gespeicherte Umgebung mit der neu bestimmten Umgebung, in der sich die Vorrichtung befindet, zu vergleichen, wobei erfasst wird, dass die Vorrichtung die Umgebung gewechselt hat, wenn die vorher gespeicherte Umgebung und die neu festgestellte Umgebung verschieden sind.

11. Vorrichtung nach einem der Ansprüche 9 bis 10, die Kommunikationsvorrichtung, für die auf diese Weise erfasst wurde, dass sie die Umgebung gewechselt hat und ein Bakensignal aussendet, **dadurch gekennzeichnet, dass** sie Mittel (ORD) aufweist, um der Kommunikationsvorrichtung zu befehlen, Mittel auszulösen, um die Kommunikationsvorrichtungen, die basierend auf dem von der Vorrichtung ausgesendeten Bakensignal synchronisiert sind, zu benachrichtigen, sich auf das von der Vorrichtung übertragene Bakensignal zu synchronisieren.

12. Vorrichtung nach Anspruch 9 oder 11, **dadurch gekennzeichnet, dass** sie Mittel (ANP) aufweist, um der Vorrichtung, für die auf diese Weise erkannt wird, dass sie die Umgebung gewechselt hat, zu befehlen, ihren Sendeleistungspegel an die neue Umgebung anzupassen, in der sie sich befindet.

13. Kommunikationssystem, das eine Vielzahl von Kommunikationsvorrichtungen umfasst, die sich von einer Umgebung in eine andere bewegen können, wobei die Umgebungen den Hochfrequenzwellen, die sich auf eine Kommunikation zwischen den Vorrichtungen beziehen, keine Ausbreitung von einer Umgebung in die andere ohne starke Dämpfung erlauben, wobei jede Kommunikationsvorrichtung dazu vorgesehen ist, einen Antennendiversitätsmechanismus in Gang zu setzen, **dadurch gekennzeichnet, dass** es eine den Ansprüchen 1 bis 12 entsprechende Vorrichtung umfasst, um die Hochfrequenzkommunikation von einer Umgebung in die andere weiterzuleiten.

14. Verfahren zum Weiterleiten eines Bakensignals oder eines Verkehrssignals einer Hochfrequenzkommunikation, die zwischen Kommunikationsvorrichtungen hergestellt wurde, die sich von einer Umgebung in eine andere bewegen können, wobei die Umgebungen den Hochfrequenzwellen, die sich auf diese Kommunikation beziehen, keine Ausbreitung von einer Umgebung in die andere ohne starke Dämpfung erlauben, wobei sich in jeder Umgebung eine Antenne befindet, wobei jede Kommunikationsvorrichtung dazu vorgesehen ist, einen Antennendiversitätsmechanismus in Gang zu setzen, welches Verfahren **dadurch gekennzeichnet ist, dass** es einen Schritt (100) zum Empfangen des Baken- oder Verkehrssignals durch mindestens eine Antenne, einen Schritt (200) zum Generieren eines als weitergeleitet bezeichneten Signals ausgehend von dem empfangenen Signal, und einen Schritt (300) zum gleichzeitigen Senden des weitergeleiteten Signals über jede Antenne aufweist, wobei der Leistungspegel des weitergeleiteten Signals, das pro Antenne ausgesendet wird, einem Prozentwert des Gesamtleistungspegels des weitergeleiteten Signals entspricht.

15. Verfahren nach Anspruch 14, **dadurch gekennzeichnet, dass** es einen Schritt (400) zum Feststellen der Umgebung umfasst, in der sich eine Vorrichtung am Ursprungsort des Sendevorgangs eines Signals befindet, das von mindestens einer der Antennen empfangen wurde.

16. Verfahren nach einem der Ansprüche 14 bis 15, **dadurch gekennzeichnet, dass** es einen Schritt (600) zum Erkennen des Umgebungswechsels einer Kommunikationsvorrichtung aufweist.

17. Verfahren nach Anspruch 16, **dadurch gekennzeichnet, dass** es einen Schritt (700) zum Anpassen des Sendeleistungspegels der Vorrichtung aufweist, für die auf diese Weise festgestellt wurde, dass sie die Umgebung gewechselt hat, während welchem der als höchster Sendeleistungspegel gemessene Wert mit einem vorbestimmten Wert (Th) verglichen wird, um den Sendeleistungspegel der Kommunikationsvorrichtung am Ursprungsort des Sendevorgangs des empfangenen Signals an die neue Umgebung anzupassen, in der sich diese Vorrichtung befindet.

18. Verfahren nach einem der Ansprüche 14 bis 17, wobei mindestens eine dieser Kommunikationsvorrichtungen, die als Basis bezeichnet wird, ein Bakensignal abgibt, **dadurch gekennzeichnet, dass** es einen Schritt (800) umfasst, um die Kommunikationsvorrichtungen, die auf das von der Basis ausgesendete Bakensignal synchronisiert sind, zu benachrichtigen, sich auf dieses Bakensignal zu synchronisieren, sobald es weitergeleitet ist, wenn für die Basis festgestellt wurde, dass sie die Umgebung gewechselt hat.

19. Computerprogramm, das auf einem Datenträger gespeichert ist, wobei das Programm Anweisungen umfasst und das Ausführen des Verfahrens nach einem der Ansprüche 14 bis 18 gestattet, wenn es von einer einem der Ansprüche 1 bis 12 entsprechenden Vorrichtung geladen und ausgeführt wird.

Fig. 1a

Fig. 1b

Fig. 1c

**Fig. 2**

Fig. 3a                    Fig. 3b                    Fig. 3c

D2

E1

VISU

DETER

MES

COMP

SEL

DETEC

MEM

COMPA

Ei

AEi

EN-1

AEN-1

EN

AEN

PAi

PAN-1

PAN

AG

AE1

PA1

PrN-1

Pe

PrN

Pri

ORD

ANP

RrN  RrN-1  Rri  Re

R

ANP

Fig. 4

| 100 | 200 | 300 | 400 | 500 | 600 | 700 | 800 |

Fig. 5

Fig. 6

Fig. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0490441 A, Philips

- FR 2869495